# EUROPEAN PATENT SPECIFICATION

(11) **EP 0 631 164 B1**
(45) Date of publication and mention of the grant of the patent: **02.09.1998**
(21) Application number: 94109717.2
(22) Date of filing: 23.06.1994
(51) Int. Cl.: G02B 6/42

(54) **Optical element module**
Optisches Modul
Module optique

(30) Priority: 23.06.1993 JP 151691/93
(43) Date of publication of application: 28.12.1994
(73) Proprietor: Hitachi, Ltd., Chiyoda-ku, Tokyo 101-0062 (JP)
(72) Inventor: Tanaka, Tsuyoshi, Totsuka-ku, Yokohama-shi (JP); Aoki, Satoshi, Chigasaki-shi (JP); Mori, Hiroshi, Totsuka-ku, Yokohama-shi (JP); Kuwano, Hideyuki, Totsuka-ku, Yokohama-shi (JP)
(74) Representative: Altenburg, Udo, Dipl.-Phys.

(56) References cited:
- EP-A- 0 465 230
- DE-A- 3 737 251
- US-A- 5 068 865
- PATENT ABSTRACTS OF JAPAN vol. 17, no. 356 (E-1394) 6 July 1993 & JP-A-05 055 609 (FUJITSU) 5 March 1993
- PATENT ABSTRACTS OF JAPAN vol. 7, no. 99 (E-172) 27 April 1983 & JP-A-58 021 890 (NIPPON DENSHIN DENWA KOSHA)
- PATENT ABSTRACTS OF JAPAN vol. 16, no. 330 (P-1388) 17 July 1992 & JP-A-04 097 306 (OKI ELECTRIC)
- ELECTRONICS LETTERS., vol.27, no.20, 26 September 1991, STEVENAGE GB pages 1845 - 1846 B. BOUDREAU ET AL. 'HIGH GAIN (21 dB) PACKAGED SEMICONDUCTOR OPTICAL AMPLIFIERS'

## Description

### BACKGROUND OF THE INVENTION

The present invention relates an optical element module such as a laser diode module, a semiconductor optical amplifier module, an external modulator module and a receiving module for optical communication.

In order to optically couple an optical element to an optical fiber when an optical element is, for example, a laser diode, in a conventional laser diode module using a lens optical coupling system including a first lens for converting emitted light of the laser diode to parallel light or spurious (or quasi) parallel light and a second lens for focusing the parallel light or the spurious parallel light to couple the light to the optical fiber, the accuracy of the space between the laser diode and the first lens and the space between the first lens and the second lens is set roughly, as described in JP-A-3-245111, in order to reduce an assembly cost.

Reference may be further made to JP-A-60-8812 and U.S. Patent No. 5,128,956.

The Japanese Patent Abstract corresponding to JP-A-05055609 discloses an optical module which is provided with a light emitting element, a condensing lens and further optical elements for coupling out the light emitted by the light emitting element. The light emitting element and the condensing lens are mounted on a stem whereby a certain distance therebetween has to be adjusted.

The Japanese Patent Abstract of JP-A-58021890 discloses a further optical fiber mounting device comprising an optical element which is aligned to an optical waveguide via a lens mounted on a lens mounting unit.

In the above prior art, the assembly cost can be reduced since the positional accuracy for fixing the first and second lenses is set roughly, while it is difficult to obtain the maximum light coupling efficiency since a deviation from the maximum coupling state is large and it is further difficult to obtain the optical element module capable of stably producing a large optical output with high yield. In addition, it is necessary to provide a large position adjustment range of the optical fiber in order to correct the deviation of the optical axis.

It is an object of the present invention to provide an optical element module which solves the problems of the prior art described above.

It is another object of the present invention to provide an optical element module improved to ensure that an optical element such as a laser diode and a first lens are positioned to the optimum coupling state without positional adjustment.

These objects are achieved according to the features of Claims 1 and 8, respectively.

In the present invention, when the optical element is a laser diode by way of example, a stem on which a laser diode and a lens holder for holding a lens for converting emitted light of the laser diode to parallel light or spurious parallel light are fixedly mounted includes a step having a dimension such that the active plane of the laser diode is coincident with the optical axis of the lens and the lens holder for holding the lens includes a surface or portion abutting against a wall of the step of the stem. A dimension between the surface and a fixed position of the lens is previously set to be equal to a space suitable for conversion of the emitted light of the laser diode to parallel light or spurious parallel light, so that the laser diode and the lens can be set to the optimum optical coupling state without adjustment of position in the optical axis direction and in the height direction.

A stem on which an optical element and a lens holder for holding a lens for converting emitted light of the optical element to parallel light or spurious parallel light or a lens for focusing light incident as parallel light or spurious parallel light on an active layer of the optical element are fixedly mounted includes a step having a dimension such that the active layer of the optical element is coincident with the optical axis of the lens. A dimension between a surface or portion of the lens holder for holding the lens and abutting against a wall of the step of the stem and a fixed position of the lens is previously set to be equal to a space suitable for conversion of the emitted light of the optical element to parallel light or spurious parallel light or focusing of parallel light or spurious parallel light which is incident light on the active layer of the optical element to thereby abut the lens holder against the step of the stem, so that the optical element and the lens can be set to the optimum optical coupling state without adjustment of position in the optical axis direction and in the height direction.

### BRIEF DESCRIPTION OF THE DRAWINGS

Fig. 1 is a sectional view illustrating a laser diode module according to an embodiment of the present invention;
Fig. 2 is an enlarged view illustrating a portion of Fig. 1;
Figs. 3A and 3B are enlarged views illustrating another portion of Fig. 1;
Fig. 4 is a sectional view illustrating a laser diode module according to another embodiment of the present invention; and
Fig. 5 is a sectional view illustrating a laser diode module according to still another embodiment of the present invention.

### DESCRIPTION OF THE PREFERRED EMBODIMENTS

Referring now to the accompanying drawings, embodiments of the present invention are described. Like elements are designated by like reference numerals throughout the drawings and repeated description is omitted unless necessary.

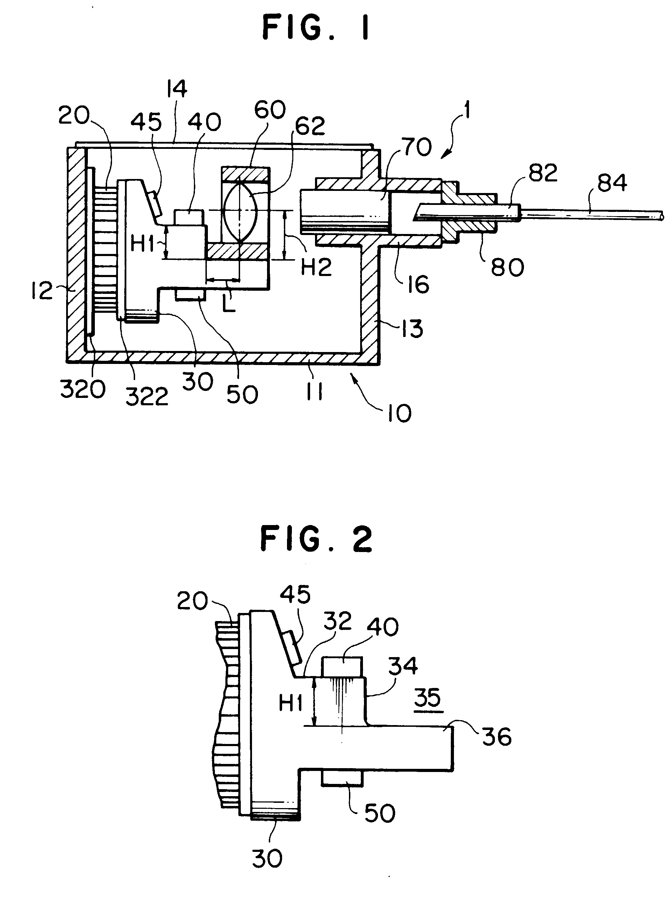

A first embodiment is now described with reference to Figs. 1 to 3.

Fig. 1 is a longitudinal sectional view of a laser diode module of the present invention having a laser diode as an optical element.

The laser diode module generally represented by 1 includes an air-tight package 10 composed of a box-shaped case 11 and a cap 14 for covering the case 11. The inside of the package 10 is filled with dry nitrogen gas.

A stem 30 mounted to a thermo-electric cooler 20 having a structure held between ceramic plates 320 and 322 is fixedly mounted on the inner side of a first wall 12 of the case 11 by mounting means 22 such as soldering.

A cylindrical sleeve 16 is formed in a second wall 13 opposite to the first wall 12 of the case 11. A second lens 70 and a ferrule holder 80 are mounted in the sleeve 16 and a ferrule 82 holding an end of an optical fiber 84 is fixedly mounted to the ferrule holder 80.

Fig. 2 is a side view illustrating the stem 30 in detail. A laser diode 40 is mounted on an upper surface (flat portion) 32 of the stem 30. A photodiode 45 for monitoring backward emitted light of the laser diode 40 is mounted on the stem 30 on the backside of the laser diode 40 and a thermistor 50 for detecting a temperature of the laser diode 40 is mounted on the stem 30 near the laser diode 40.

A surface (wall surface) 34 perpendicular to an axial line of laser light emitted from the laser diode 40 and step 35 constituted by a plane (flat portion) 36 parallel to the axial line of the laser light are formed in front of the laser diode 40 on the stem 30.

Mounted on the step 35 is a lens holder 60 to which a first lens 62 is fixedly mounted by soldering or welded by means of glass having a low melting point.

The first lens is a nonspherical lens. The lens holder 60 will be described later.

A beam emitted from the laser diode 40 is converted to a parallel beam or a spurious parallel beam by the first lens 62 and focused by the second lens 70 to be incident on the optical fiber 84 held by the ferrule 82 so that the laser diode 40 is optically coupled to the optical fiber 84.

The optical fiber 84 is held by the ferrule 82 and the ferrule 82 is also held by the ferrule holder 80 to adjust a position of the ferrule in the optical axis direction and the position of the ferrule holder 80 is adjusted in the direction perpendicular to the optical axis at an end surface of the sleeve 16 of the case 11 to which the second lens 70 is mounted so that the ferrule holder is fixed in the optimum coupling state by soldering.

Air in the air-tight package 10 is replaced by dry nitrogen gas and the cap 14 is seam-welded so that the case is hermetically sealed air-tightly.

In the above optical coupling system, the permissible positional deviation amount having coupling deterioration (or coupling loss) of 0.2 dB due to a positional adjustment error is ± 20 µm in the optical axis direction and ± 10 µm in the direction perpendicular to the optical axis between the laser diode 40 and the first lens 62 and ± 1000 µm or more in the optical axis direction and ± 90 µm in the direction perpendicular to the optical axis between the first lens 60 and the second lens 70. In this manner, in order to obtain the maximum coupling, it is important to position the laser diode 40 and the first lens 62 with high accuracy.

In the present invention, the step 35 formed on the stem 30 is utilized as a reference plane to thereby assure the above dimensions by the machine working, so that adjustment in the assembling work is eliminated.

More particularly, it is necessary to cause the optical axis line of the first lens 62 fixed to the lens holder 60 to coincide with an active plane of the laser diode 40. A height H2 from a mounting plane or surface of the lens holder 60 to the stem 30 to the optical axis line of the first lens 62 can be previously set on the design and desired working accuracy can be ensured easily. More particularly, the dimension of the first lens can be designated to desired accuracy in a specification and the dimension including a thickness of the lens holder can be also designated in the specification and the lens holder can be obtained with desired accuracy. Accordingly, the height H2 can be obtained with the desired accuracy.

Further, the step 35 of the stem 30 made of material such as kovar or copper tungsten can be also obtained easily with high accuracy by machine working. The height from the mounting plane to the active plane of the laser diode 40 can be specified or known in the specification. The dimension H1 of the difference between the horizontal plane 36 of the step 35 and the mounting plane 32 of the laser diode 40 may be previously set so that a sum of the dimension H1 and the height from the mounting plane to the active plane of the laser diode 40 is coincident with the height H2. In other words, by machine-working the stem 30 so that the difference height H1 is equal to a height obtained by subtracting the height from the mounting plane to the active plane of the laser diode 40 from the height H2, the active plane of the laser diode 40 is coincident with the optical axis line of the first lens 62 with high accuracy even if the laser diode module is assembled without adjustment.

When the active plane is positioned just on the mounting plane of the laser diode 40, the difference height H1 may be previously set so that the height H1 is substantially equal to the height H2.

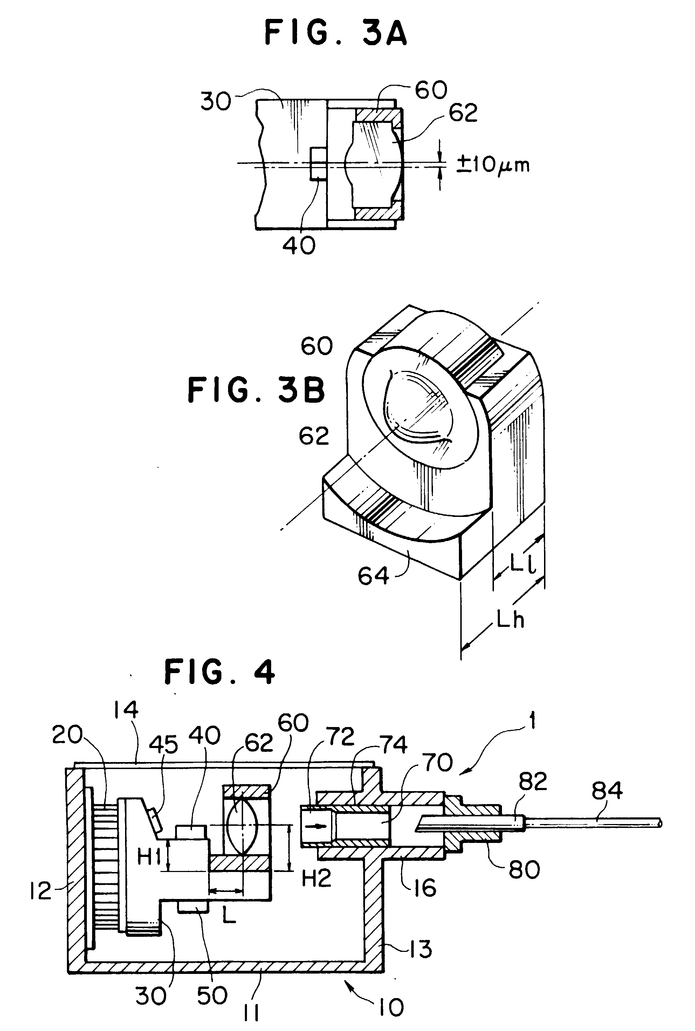

A length L from a mounting surface (an end of a bottom of the lens holder) 64 (Fig. 3B) of the lens holder 60 abutting against a surface (wall) 34 to the center of the first lens 62 with respect to the surface (wall) 34 formed vertically to the mounting plane 32 of the laser diode 40 on the stem 30 is set to a space suitable for conversion of the emitted light of the laser diode 40 to the parallel beam or the spurious parallel beam. The laser diode 40 may be mounted on the upper plane 32 of the stem so that an end on the laser light emitting side of the laser diode 40 is aligned with the vertical surface (wall) 34 of the step 35. The surface 34 of the step is not necessarily required to be vertical as far as the surface 34 of the step has the known shape and dimension.

Figs. 3A and 3B illustrate the lens holder 60 mounted to the stem 30 in place and an example of a structure of the lens holder 60, respectively.

As shown in Fig. 3B, the first lens (nonspherical lens) 62 is mounted to the lens holder 60. An upper portion of the first lens 62 is exposed from the lens holder 60 so that a central axis of the first lens 62 can be observed from the upper side. As an example of the size of the lens holder 60, a length Lh of the mounting portion of the lens holder in the optical axis direction is 1.3 mm and a thickness Le of the mounting portion of the first lens is 1 mm.

Fig. 3A illustrates the lens holder 60 mounted on the stem and as viewed from the upper side. The positioning of the lens holder 60 in the direction perpendicular to the optical axis is made by adjusting the lens holder 60 to fix it so that a deviation between the center (active layer) of the laser diode 40 and the central axis of the first lens 62 falls within ± 10 µm while observing them from the upper portion of the stem 30 by a microscope as shown in Fig. 3A.

Fig. 4 is a longitudinal sectional view schematically illustrating a laser diode module according to a second embodiment of the present invention.

In Fig. 4, an optical isolator 72 for suppressing reflected-back light is disposed in front of a second lens 70. The second embodiment is similar to the embodiment of Fig. 1 except the optical isolator 72 disposed in front of the second lens 70. The second lens 70 and the optical isolator 72 are fixedly mounted to an optical isolator holder 74 and the optical isolator holder is fixedly mounted to a sleeve 16.

As a modification of the embodiment of Fig. 4, the optical isolator 72 may be fixedly mounted on the stem 30.

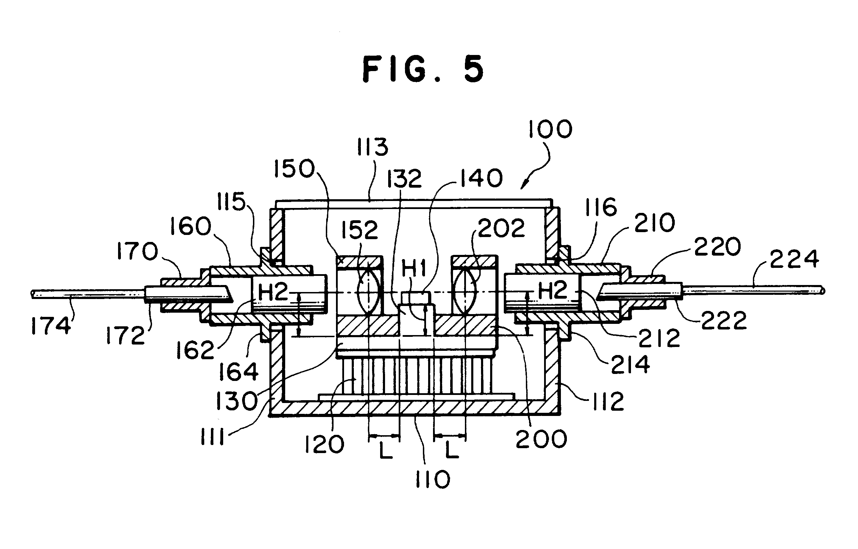

In the first and second embodiments, optical assembly accuracy can be obtained by just mounting and fixing the lens holder 60 holding the first lens 62 to the step 35 of the stem 30 on which the laser diode 40 is mounted. Accordingly, the laser diode module having high performance can be manufactured easily. A photodiode can be used instead of the laser diode. The sleeve 16 to which the second lens 70 is mounted can be formed separately from the wall 13 of the case 11 and, as shown in Fig. 5 (see lens sleeves 160 and 210), the sleeve 16 can be loosely fitted into a hole formed in the wall 13 to adjust the mounting position thereof.

Referring now to Fig. 5, a third embodiment of the present invention is described.

Fig. 5 is a longitudinal sectional view schematically illustrating a semiconductor optical amplifier module of the present invention having an optical element constituted by a semiconductor optical amplifier chip.

The semiconductor optical amplifier module generally represented by reference numeral 100 includes a package composed of a box-shaped case 110 and a cap 113 for hermetically sealing the case 110.

Holes 115 and 116 which an inlet lens sleeve 160 and an outlet lens sleeve 210 penetrate, respectively, are formed in a first wall 111 and a second wall 112 of the case, respectively, which are disposed opposite to each other.

A stem 130 is mounted on a bottom of the case 110 through a thermo-electric cooler 120. The stem 130 includes a square projection 132 formed in a middle thereof and two steps are formed on both sides of the projection. A semiconductor optical amplifier chip 140 and a temperature detection thermistor (not shown) are fixedly mounted on the projection 132 of the stem 130.

A structure of the inlet or incident side of the semiconductor optical amplifier module is now described. Fixedly mounted in a first step of the stem 130 is an inlet lens holder 150 to which a first inlet lens 152 is fixedly mounted by soldering or welded by means of glass having a low melting point.

The inlet lens sleeve 160 is mounted in the hole 115 formed in the wall opposite to the inlet lens holder 150 of the case 110. A second inlet lens 162 is mounted within the cylindrical inlet lens sleeve 160 in opposing relationship with the first inlet lens (nonspherical lens) 152 and an inlet ferrule 172 which holds an end of an inlet optical fiber 174 is mounted in the outside of the inlet lens sleeve 160 through an inlet ferrule holder 170.

The inlet lens sleeve 160 is disposed in the hole 115 formed in the case so that a space is formed between the inlet lens sleeve and the hole 115. Thus, the second inlet lens 162 is positioned so that the optical axis of the second inlet lens is aligned with the optical axis of the first inlet lens 152, and the inlet lens sleeve 160 is fixedly welded to the wall 111 of the case by means of a flange 164 of the inlet lens sleeve 160.

A structure of an outlet side of the semiconductor optical amplifier module is also similar to that of the inlet side thereof. More specifically, an outlet lens holder 200 to which a first outlet lens (nonspherical lens) 202 is fixedly mounted by soldering or welded by means of glass having a low melting point is fixedly mounted to a second step of the stem 130.

The outlet lens sleeve 210 is mounted in the hole 116 formed in the wall 112 opposite to the outlet lens holder 200 of the case 110. A second outlet lens 212 is mounted in the cylindrical outlet lens sleeve 210 in opposing relationship with the first outlet lens 202 and an outlet ferrule 222 which holds an end of an outlet optical fiber 224 is mounted to the outside of the outlet lens sleeve 210 through an outlet ferrule holder 220.

The outlet lens sleeve 210 is disposed in the hole 116 formed in the case so that a space is formed between the outlet lens sleeve and the hole 116. Thus, the second outlet lens 212 is positioned so that the optical axis of the second outlet lens is aligned with the optical axis of the first outlet lens 202 and the second outlet lens 212 is fixedly welded to the wall 112 of the case by means of a flange 214 of the outlet lens sleeve 210.

In the semiconductor optical amplifier module, it is necessary to cause the position of the active plane of the semiconductor optical amplifier chip 140 to coincide with the optical axis of the first inlet lens 152. The active plane of the chip is caused to coincide with the optical axis line of the inlet lens by performing machine working so that the height H1 from the mounting plane of the projection 132 of the stem 130 on which the semiconductor optical amplifier chip 140 is mounted, to the mounting reference plane of the inlet lens holder 150 is equal to a distance obtained by subtracting a length from the bottom to the active plane of the semiconductor optical amplifier chip 140, from the height H2 from the mounting plane of the projection 132 to the optical axis of the inlet lens holder 150. The height from the bottom to the active plane of the semiconductor optical amplifier chip 140 can be known from the specification.

Further, a distance from the active plane of the chip 140 to the inlet lens 152 is set to a distance that non-amplified natural light emitted by the semiconductor optical amplifier chip 140 is converted to a parallel beam or a spurious parallel beam by means of the first inlet lens 152 by machine-working a length L from an end surface of a mounting portion of the inlet lens holder 150 being in contact with an abutment plane (vertical plane) of the step of the projection 132 of the stem to the center of the inlet lens. The inlet lens holder 150 is formed in a structure similar to that of Fig. 3. Further, the length of the mounting plane of the projection 132 in the optical axis direction is set to be equal to the length of the semiconductor optical amplifier chip in the optical axis direction and the semiconductor optical amplifier chip is fixedly disposed in the mounting plane of the projection 132 so that the end of the chip is coincident with the corresponding end of the projection.

Similarly, the height H1 from the chip mounting plane of the stem 130 to the mounting reference plane of the outlet lens holder 200 is set with high accuracy by machine working. Further, the length L from an abutment plane (vertical plane) of the outlet lens holder 200 to the projection 132 of the stem 130 to the center of the first outlet lens 202 is also worked to a desired dimension by machine working. The outlet lens holder 200 is also formed in a structure similar to that of Fig. 3.

The inlet optical fiber 174 and the outlet optical fiber 224 are position-adjusted in the optical axis direction and the inlet ferrule holder 17 and the outlet ferrule holder 220 are position-adjusted in the direction perpendicular to the optical axis to be fixed by soldering in opposing relationship with the ends of the inlet lens holder 150 and the outlet lens holder 200 in the optimum coupling state.

As described above, in the embodiment of Fig. 1, the first lens is mounted with respect to the emitted light of the laser diode without adjustment to attain the optimum light coupling state to thereby reduce the working cost required for the assembly of the high-output laser diode module. In the embodiment of Fig. 5, the first inlet lens and the first outlet lens are mounted with respect to the semiconductor optical amplifier chip without adjustment to attain the optimum light coupling state to thereby minimize loss due to the optical coupling system of the semiconductor optical amplifier module and reduce the working cost required for the assembly.

## Claims

1. An optical element module comprising :
a stem (30) on which an optical element (40) and a first lens (62) for converting emitted light of said optical element to parallel light or quasi parallel light are mounted;
a second lens (70) for focusing the parallel light or the quasi parallel light from said first lens;
an optical fiber (84) coupled to said optical element by means of said first and second lenses; and
a package (19; 11, 14) for accommodating and fixing said stem, said second lens and said optical fiber,
wherein said first lens (62) is fixedly mounted to a lens holder (60) and said stem includes an upper flat portion (32) on which said optical element is fixedly mounted and a step (35) having a lower flat portion recessed from said upper flat portion and on which said lens holder is fixedly mounted,
**characterized in that**
said step forming wall (34) having a height which is previously set so that a light emitting active plane of said optical element (40) is coincident with the optical axis of said first lens said holder having an end (64) abutting against said wall (34), the distance (L) from the center of said first lens (62) fixedly mounted in said holder to said end of said holder being previously set to a distance such that the distance between said optical element and said first lens is equal to the distance required for conversion of the emitted light of said optical element to the parallel light or the quasi parallel light by said first lens.

2. An optical element module according to claim 1, characterized in that an end surface of said optical element (40) on the light emitting side thereof is coplanar with the surface of said wall (34).

3. An optical element module according to claim 1, characterized in that said optical element (40) comprises a laser diode.

4. An optical element module according to claim 1, characterized by an optical isolator disposed between said first (62) and second (70) lenses.

5. An optical element module according to claim 1, characterized in that said lens holder (60) is made of metal or ceramic.

6. An optical element module according to claim 1, characterized in that said first lens ( 62) comprises a nonspherical lens.

7. An optical element module according to claim 1, characterized in that said optical element (40) includes a bottom and an active plane for producing the emitted light about an axis parallel to said bottom and said active plane is formed on said bottom or remote from said bottom by a predetermined distance, the height of said wall (34) being previously set so that the sum of the height of said wall (34) and the height from the bottom to said active plane of said optical element (40) is substantially equal to the distance from the bottom of said lens holder (60) to the optical axis of said first lens (62).

8. An optical element module comprising :
a stem (130) on which an optical element (140), a first inlet lens (152) for focusing incident parallel light or quasi light on an active plane of said optical element as input light to said optical element, and a first outlet lens (202) for converting emitted light of said optical element to parallel light or quasi parallel light are mounted; an inlet optical fiber (174);
a second inlet lens (162) for converting emitted light of said inlet optical fiber (174) to parallel light or quasi parallel light and optically coupled to said first inlet lens (152);
a second outlet lens (212) for focusing the parallel light or the quasi parallel light from said first outlet lens (202);
an outlet optical fiber (224) optically coupled to said optical element by means of said first (202) and second (212) outlet lenses; and
a package (111, 113) for accommodating and fixing said stem, said inlet optical fiber, said second inlet lens, said second outlet lens and said outlet optical fiber,
wherein said first inlet lens (152) and said first outlet lens (202) are fixedly mounted in first (150) and second (200) lens holders, respectively, and said stem (130) includes an upper flat portion on which said optical element is fixedly mounted, a first step having a first lower flat portion recessed from one end of said upper flat portion and on which said first lens holder (150) is fixedly mounted, and a second step having a second lower flat portion recessed from the other end of said upper flat portion and on which said second lens holder (200) is fixedly mounted, said first step forming a first wall having a height which is previously set so that the optical axis of said first inlet lens (152) is coincident with a light receiving active plane of said optical element (140), said second step forming a second wall having a height which is previously set so that a light emitting active plane of said optical element is coincident with the optical axis if said first outlet lens (202),
said first (150) and second (200) lens holders including first and second ends abutting against said first and second walls, respectively, the distance (L) from the center of said first inlet lens fixedly mounted to said first lens holder (150) and said first end is previously set to a distance such that the distance between said first inlet lens (152) and said optical element (140) is equal to the distance required for conversion of emitted natural light of said optical element to parallel light or quasi parallel light.

9. An optical element module according to claim 8, characterized in that said optical element includes a bottom and said active plane of said optical element is formed on said bottom or remote from said bottom by a predetermined distance.

10. An optical element module according to claim 9, characterized in that the height of said first wall is previously set so that the sum of the height of said first wall of said stem and the height from said bottom to said active plane of said optical element (140) is substantially equal to the distance from said bottom of said first lens holder to the optical axis of said first lens.

11. An optical element module according to claim 9, characterized in that the height of said second wall is previously set so that the sum of the height of said second wall of said stem and the height from said bottom to said active layer of said optical element (140) is substantially equal to the distance from said bottom of said second lens holder (200) to the optical axis of said first outlet lens (202).

12. An optical element module according to claim 8, characterized in that said optical element (140) comprises a semiconductor optical amplifier chip.

13. An optical element module according to claim 8, characterized in that said optical element (140) comprises an external modulator chip.

14. An optical element module according to claim 8, characterized by an optical isolator disposed between said first (152) and second (162) inlet lenses or between said first and second outlet lenses.

15. An optical element module according to claim 8, characterized in that said first (150) and second (200) lens holders are made of metal or ceramic.

16. An optical element module according to claim 8, characterized in that said first inlet lens and said first outlet lens each comprises a nonspherical lens.

## Patentansprüche

1. Optisches Modul, enthaltend:
einen Sockel (30), auf dem ein optisches Element (40) und eine erste Linse (62) zur Umwandlung des von dem optischen Element emittierten Lichts in paralleles Licht oder quasiparalleles Licht angeordnet sind;
eine zweite Linse (70) zum Fokussieren des parallelen oder quasiparallelen Lichts von der Linse;
eine optische Faser (84), gekoppelt an das optische Element mittels der ersten und zweiten Linse; und
ein Gehäuse (19; 11, 14) zur Aufnahme und Fixierung des Sockels, der zweiten Linse und der optischen Faser,
wobei die erste Linse (62) fest auf einem Linsenhalter (60) montiert ist und der Sockel einen oberen flachen Abschnitt (32), auf dem das optische Element fest montiert ist, und eine Stufe (35) mit einer gegenüber dem oberen flachen Abschnitt zurücktretenden unteren flachen Abschnitt aufweist, auf der der Linsenhalter fest montiert ist, dadurch gekennzeichnet, daß
die die Stufe bildende Wand (34) eine Höhe hat, die vorab so eingestellt ist, daß eine lichtemittierende Ebene des optischen Elements (40) mit der optischen Achse der ersten Linse zusammenfällt, wobei ein Ende (64) des Halters an der Wand (34) anliegt, und daß der Abstand (L) von der Mitte der ersten, fest im Halter montierten Linse (62) bis zum Ende des Halters vorab auf einen solchen Wert eingestellt ist, daß der Abstand zwischen dem optischen Element und der ersten Linse gleich dem Abstand ist, der für die Umwandlung des vom optischen Element emittierten Lichts durch die erste Linse in paralleles oder quasiparalleles Licht erforderlich ist.

2. Optisches Modul nach Anspruch 1, dadurch gekennzeichnet, daß die Endfläche des optischen Elements (40) auf der lichtemittierenden Seite koplanar mit der Oberfläche der Wand (34) ist.

3. Optisches Modul nach Anspruch 1, dadurch gekennzeichnet, daß das optische Element (40) eine Laserdiode enthält.

4. Optisches Modul nach Anspruch 1, dadurch gekennzeichnet, daß zwischen der ersten (62) und der zweiten (70) Linse ein optischer Isolator angeordnet ist.

5. Optisches Modul nach Anspruch 1, dadurch gekennzeichnet, daß der Linsenhalter (60) aus Metall oder Keramik besteht.

6. Optisches Modul nach Anspruch 1, dadurch gekennzeichnet, daß die erste Linse (62) eine nicht-sphärische Linse enthält.

7. Optisches Element nach Anspruch 1, dadurch gekennzeichnet, daß das optische Element (40) einen Boden und eine aktive Ebene zur Erzeugung von emittiertem Licht um eine Achse parallel zu dem Boden hat, und daß die aktive Ebene auf dem Boden oder um eine vorbestimmte Distanz entfernt von dem Boden ausgebildet ist, wobei die Höhe der Wand (34) derart voreingestellt ist, daß die Summe der Höhe der Wand (34) und der Höhe vom Boden der aktiven Ebene des optischen Elements (40) im wesentlichen gleich ist der Distanz vom Boden des Linsenhalters (60) zur optischen Achse der ersten Linse (62).

8. Optisches Modul, enthaltend:
einen Sockel (130), auf dem ein optisches Element (140), eine erste Eintrittslinse (152) für das Fokussieren von einfallendem parallelen Licht oder quasiparallelem Licht auf eine aktive Ebene des optischen Elements als Eintrittslicht für das optische Element und eine erste Austrittslinse (202) zum Umwandeln von emittiertem Licht des optischen Elements in paralleles Licht oder quasiparalleles Licht montiert sind;
eine optische Eintrittsfaser (174),
eine zweite Eintrittslinse (162) zum Umwandeln emittierten Lichts der optischen Eintrittsfaser (174) in paralleles Licht oder quasiparalleles Licht und optisch mit der ersten Eintrittslinse (152) gekoppelt,
eine zweite Austrittslinse (212) zum Fokussieren des parallelen Lichts oder quasiparallelen Lichts aus der ersten Austrittslinse (202),
eine optische Austrittsfaser (224), die mit dem optischen Element mit Hilfe der ersten (202) und der zweiten (212) Austrittslinsen gekoppelt ist, und
ein Gehäuse (111, 113) zur Aufnahme und Fixierung des Sockels der optischen Eintrittsfaser, der zweiten Eintrittslinse, der zweiten Austrittslinse und der optischen Austrittsfaser,
wobei die erste Eintrittslinse (152) und die erste Austrittslinse (202) fest in ersten (150) bzw. zweiten (200) Linsenhaltern montiert sind, und daß der Sockel (130) einen oberen flachen Abschnitt umfaßt, auf dem das optische Element fest montiert ist, ferner eine erste Stufe mit einem ersten unteren flachen Abschnitt, der von einem Ende des oberen flachen Abschnitts zurücktritt und auf dem der erste Linsenhalter (150) fest montiert ist, und eine zweite Stufe mit einem zweiten unteren flachen Abschnitt, der von dem anderen Ende des oberen flachen Abschnitts zurücktritt und an dem der zweite Linsenhalter (200) fest montiert ist, wobei die erste Stufe ein erste Wand bildet, die eine Höhe hat, die voreingestellt ist, so daß die optische Achse der ersten Eintrittslinse (152) mit der lichtempfangenden aktiven Ebene des optischen Elements (140) zusammenfällt, und die zweite Stufe eine zweite Wand bildet mit einer Höhe, die voreingestellt ist, so daß eine lichtemittierende aktive Ebene des optischen Elements mit der optischen Achse der ersten Austrittslinse (202) zusammenfällt,
wobei der erste (150) und der zweite (200) Linsenhalter erste und zweite Enden haben, die sich an erste bzw. zweite Wände anlegen, wobei die Distanz von der Mitte der ersten Eintrittslinse, die fest mit dem ersten Linsenhalter (150) montiert ist, und dem ersten Ende voreingestellt ist auf eine Distanz derart, daß die Distanz zwischen der ersten Eintrittslinse (152) und dem optischen Element (140) gleich der Distanz ist, die erforderlich ist zur Umwandlung des emittierten natürlichen Lichts des optischen Elements in paralleles Licht oder quasiparalleles Licht.

9. Optisches Modul nach Anspruch 8, dadurch gekennzeichnet, daß das optische Element einen Boden umfaßt und daß die aktive Ebene des optischen Elements auf diesem Boden oder um eine vorbestimmte Distanz entfernt von dem Boden ausgebildet ist.

10. Optisches Modul gemäß Anspruch 9, dadurch gekennzeichnet, daß die Höhe der ersten Wand voreingestellt ist, so daß die Summe der Höhe der ersten Wand des Sockels und die Höhe von dem Boden zur aktiven Ebene des optischen Elements (140) im wesentlichen gleich ist der Distanz von dem Boden des ersten Linsenhalters zur optischen Achse der ersten Linse.

11. Optisches Modul nach Anspruch 9, dadurch gekennzeichnet, daß die Höhe der zweiten Wand voreingestellt ist derart, daß die Summe der Höhe der zweiten Wand des Sockels und die Höhe von dem Boden zur aktiven Schicht des optischen Elements (140) im wesentlichen gleich ist der Distanz von dem Boden des zweiten Linsenhalters (200) zur optischen Achse der ersten Austrittslinse (202).

12. Optisches Modul nach Anspruch 8, dadurch gekennzeichnet, daß das optische Element (140) einen optischen Halbleiter-Verstärkerchip enthält.

13. Optisches Modul nach Anspruch 8, dadurch gekennzeichnet, daß das optische Element (140) einen externen Modulatorchip enthält.

14. Optisches Modul nach Anspruch 8, gekennzeichnet durch einen optischen Isolator, der zwischen der ersten (152) und der zweiten (162) Eintrittslinse oder zwischen der ersten und der zweiten Austrittslinse angeordnet ist.

15. Optisches Modul nach Anspruch 8, dadurch gekennzeichnet, daß der erste (150) und der zweite (200) Linsenhalter aus Metall oder Keramik bestehen.

16. Optisches Modul nach Anspruch 8, dadurch gekennzeichnet, daß die erste Eintrittslinse und die erste Austrittslinse je eine nicht-sphärische Linse enthalten.

## Revendications

1. Un module d'élément optique comprenant :
une embase (30) sur laquelle sont montés un élément optique (40) et une première lentille (62) pour convertir de la lumière émise de l'élément optique en lumière parallèle ou lumière quasi-parallèle ;
une seconde lentille (70) pour focaliser la lumière parallèle ou la lumière quasi-parallèle provenant de la première lentille ;
une fibre optique (84), couplée à l'élément optique au moyen de la première et de la seconde lentilles ; et
un boîtier (19 ; 11, 14) pour loger et fixer l'embase, la seconde lentille et la fibre optique,
dans lequel la première lentille (62) est montée fixe sur un porte-lentille (60) et l'embase comprend une partie plate supérieure (32) sur laquelle l'élément optique est monté fixe et un ressaut (35) possédant une partie plate inférieure en retrait par rapport à la partie plate supérieure et sur lequel le porte-lentille est monté fixe,
caractérisé en ce que
le ressaut forme une paroi (34) avec une hauteur qui est préalablement ajustée de manière qu'un plan actif d'émission lumineuse de l'élément optique (40) coïncide avec l'axe optique de la première lentille, le porte-lentille possédant une extrémité (64) venant en butée contre cette paroi (34), la distance (L) entre le centre de la première lentille (62) montée fixe dans le porte-lentille et ladite extrémité de ce porte-lentille étant préalablement ajustée à une distance telle que la distance entre l'élément optique de la première lentille soit égale à la distance requise pour la conversion de la lumière émise de l'élément optique en lumière parallèle ou en lumière quasi-parallèle par la première lentille.

2. Un module d'élément optique selon la revendication 1, caractérisé en ce qu'une surface d'extrémité de l'élément optique (40) du côté d'émission lumineuse de celui-ci est coplanaire avec la surface de ladite paroi (34).

3. Un module d'élément optique selon la revendication 1, caractérisé en ce que l'élément optique (40) comprend une diode laser.

4. Un module d'élément optique selon la revendication 1, caractérisé par un isolateur optique disposé entre la première (62) et la seconde (70) lentille.

5. Un module d'élément optique selon la revendication 1, caractérisé en ce que le porte-lentille (60) est réalisé en métal ou en céramique.

6. Un module d'élément optique selon la revendication 1, caractérisé en ce que la première lentille (62) comprend une lentille asphérique.

7. Un module d'élément optique selon la revendication 1, caractérisé en ce que l'élément optique (40) comprend un fond et un plan actif pour produire la lumière émise autour d'un axe parallèle à ce fond et le plan actif est formé sur le fond ou en éloignement de ce fond d'une distance prédéterminée, la hauteur de ladite paroi (34) étant préalablement ajustée de manière que la somme de la hauteur de cette paroi (34) et de la hauteur entre le fond et le plan actif de l'élément optique (40) soit pratiquement égale à la distance entre le fond du porte-lentille (60) et l'axe optique de la première lentille (62).

8. Un module d'élément optique comprenant :
une embase (130) sur laquelle sont montés un élément optique (140), une première lentille d'entrée (152) pour focaliser la lumière parallèle ou lumière quasi-parallèle incidente sur un plan actif de l'élément optique comme lumière d'entrée vers cet élément optique, et une première lentille de sortie (202) pour convertir la lumière émise de l'élément optique en lumière parallèle ou lumière quasi-parallèle ;
une fibre optique d'entrée (174) ;
une seconde lentille d'entrée (162) pour convertir la lumière émise de la fibre optique d'entrée (174) en lumière parallèle ou lumière quasi-parallèle et couplée optiquement à la première lentille d'entrée (152) ;
une seconde lentille de sortie (212) pour focaliser la lumière parallèle ou la lumière quasi-parallèle provenant de cette première lentille de sortie (202) ;
une fibre optique de sortie (224) couplée optiquement à l'élément optique au moyen des première (202) et seconde (212) lentilles de sortie ; et
un boîtier (111, 113) pour loger et fixer l'embase, la fibre optique d'entrée, la seconde lentille d'entrée, la seconde lentille de sortie et la fibre optique de sortie,
dans lequel la première lentille d'entrée (152) et la première lentille de sortie (202) sont montées fixes dans un premier (150) et un second (200) porte-lentilles respectivement, et l'embase (130) comprend une partie plate supérieure sur laquelle l'élément optique est monté fixe, un premier ressaut ayant une première partie plate inférieure en retrait par rapport à une extrémité de ladite partie plate supérieure et sur la quelle est monté fixe le premier porte-lentille (150), et un second ressaut ayant une seconde partie plate inférieure en retrait par rapport à l'autre extrémité de ladite partie plate supérieure et sur laquelle est monté fixe le second porte-lentille (200), ce premier ressaut formant une première paroi dont la hauteur est préalablement ajustée de manière que l'axe optique de la première lentille d'entrée (152) coïncide avec un plan actif de réception de lumière sur l'élément optique (140), le second ressaut formant une seconde paroi dont la hauteur est préalablement ajustée de manière qu'un plan actif d'émission lumineuse de l'élément optique coïncide avec l'axe optique de la première lentille de sortie (202),
le premier (150) et le second (200) porte-lentilles comprenant une première et une seconde extrémité venant en butée contre la première et la seconde paroi, respectivement, la distance (L) entre le centre de la première lentille d'entrée montée fixe sur le premier porte-lentille (150) et la première extrémité est préalablement ajustée à une distance telle que la distance entre la première lentille d'entrée (152) et l'élément optique (140) soit égale à la distance requise pour la conversion de la lumière naturelle émise de l'élément optique en lumière parallèle ou lumière quasi-parallèle.

9. Un module d'élément optique selon la revendication 8, caractérisé en ce que l'élément optique comprend un fond et le plan actif de cet élément optique est formé sur ce fond ou en éloignement de ce fond d'une distance prédéterminée.

10. Un module d'élément optique selon la revendication 9, caractérisé en ce que la hauteur de la première paroi est préalablement ajustée de manière que la somme de la hauteur de la première paroi de l'embase et de la hauteur comprise entre le fond et le plan actif de l'élément optique (140) soit pratiquement égale à la distance comprise entre ce fond du premier porte-lentille et l'axe optique de la première lentille d'entrée.

11. Un module d'élément optique selon la revendication 9, caractérisé en ce que la hauteur de la seconde paroi est préalablement ajustée de manière que la somme de la hauteur de la seconde paroi de l'embase et de la hauteur comprise entre le fond et la couche active de l'élément optique (140) soit pratiquement égale à la distance comprise entre ce fond du second porte-lentille (200) et l'axe optique de la première lentille de sortie (202).

12. Un module d'élément optique selon la revendication 8, caractérisé en ce que l'élément optique (140) comprend une puce d'amplificateur optique à semiconducteur.

13. Un module d'élément optique selon la revendication 8, caractérisé en ce que l'élément optique (140) comprend une puce de modulateur externe.

14. Un module d'élément optique selon la revendication 8, caractérisé par un isolateur optique disposé entre la première (152) et la seconde (162) lentille d'entrée ou entre la première et la seconde lentille de sortie.

15. Un module d'élément optique selon la revendication 8, caractérisé en ce que le premier (150) et le second (200) porte-lentille sont réalisés en métal ou en céramique.

16. Un module d'élément optique selon la revendication 8, caractérisé en ce que la première lentille d'entrée et la première lentille de sortie comprennent chacune une lentille asphérique.
